# EUROPÄISCHE PATENTSCHRIFT

(11) **EP 1 763 428 B1**
(45) Veröffentlichungstag und Bekanntmachung des Hinweises auf die Patenterteilung: **03.03.2010**
(21) Anmeldenummer: 05756961.8
(22) Anmeldetag: 14.06.2005
(51) Int. Cl.: B29C 49/68, B29C 49/64

(54) **HEIZOFEN FÜR VORFORMLINGE**
HEATING FURNACE FOR PREFORMS
FOUR DE CHAUFFAGE DE PREFORMES

(30) Priorität: 03.07.2004 DE 202004010454 U
(43) Veröffentlichungstag der Anmeldung: 21.03.2007
(73) Patentinhaber: KRONES Aktiengesellschaft, 93073 Neutraubling (DE)
(72) Erfinder: HANER, Arno, 93053 Regensburg (DE)
(86) Internationale Anmeldenummer: PCT/EP2005/006345
(87) Internationale Veröffentlichungsnummer: WO 2006/002751

(56) Entgegenhaltungen:
- DE-A1- 3 442 243
- DE-A1- 10 141 639
- DE-A1- 19 724 621
- DE-A1- 19 909 542
- US-A- 4 199 629
- PATENT ABSTRACTS OF JAPAN Bd. 2002, Nr. 09, 4. September 2002 (2002-09-04) & JP 2002 144412 A (NISSEI ASB MACH CO LTD), 21. Mai 2002 (2002-05-21)

## Beschreibung

Die Erfindung betrifft eine Vorrichtung zur Warmbehandlung von Kunststoffrohlingen insbesondere Preforms zur Herstellung von Kunststoffflaschen nach dem Oberbegriff des Anspruchs 1.

Die positiven Eigenschaften und die Verfügbarkeit von vielen verschiedenen Kunststoffen sind es, die die Beliebtheit von Kunststoffprodukten begründen. Vor allem auch in der Verpackungs- und Lebensmittelindustrie werden Kunststoffe verwendet. Insbesondere in der Getränkeindustrie werden Kunststoffflaschen zum Abfüllen genutzt. Die vorliegende Erfindung kann also vor allem auch zur Erwärmung von Kunststoffrohlingen zur Herstellung von Kunststoffflaschen verwendet werden.

Vorrichtungen zur Behandlung von Kunststoffrohlingen vor der Weiterverarbeitung zu Kunststoffflaschen sind im Stand der Technik hinlänglich bekannt. Die Schrift DE 200 20 150 U1 zeigt z. B. eine Erwärmungsstrecke einer Streckblasanlage bei der Kunststoffpreforms entlang einer Reflektorstrecke geführt erwärmt werden. Die von den Strahlern emittierte Strahlung erwärmt dabei den Kunststoffpreform und wird nach dem Auftreffen auf dem Gegenreflektor von diesem diffus reflektiert. Die Strahlungsquellen befinden sich dabei zwischen einem Hauptreflektor und einer Quarzglasscheibe.

Auch das Dokument US 4,147,487 zeigt eine Heizvorrichtung für Preforms. In dieser Anordnung befinden sich die Preforms zwischen den Strahlern der Heizeinrichtung und den gegenüberliegenden Gegenreflektoren, die eine teilzylindrische Form aufweisen. Die durch den Preform hindurch oder an diesem vorbeitretende Strahlung wird am Gegenreflektor umgelenkt und zur Erwärmung des Preforms zurückgeworfen.

Die DE 101 41 639 A1 zeigt eine Heizeinrichtung zum Erwärmen von Vorformlingen mit Infrarot Heizelementen, die sowohl auf der einen Seite des Preforms als auch auf der anderen Seite des Preforms von Reflektorelementen eingegrenzt werden, wobei der Gegenreflektor 22 Plattenförmige Elemente aufweist, die entweder parallel zu einer von den Heizstrahlern aufgespannten Ebene sind oder leicht geneigt zu dieser.

DE 34 42 243 A1 zeigt eine Erwärmungs- bzw. Vernetzungsvorrichtung für z.B. Rohre mittels Strahlung, wobei den zu vernetzenden Gegenständen eine die Strahlung streuende Folie vorgeschaltet ist.

Eine weitere Heizeinrichtung zum Erwärmen von Kunststoffrohlingen mittels IR-Strahlung zeigt die DE 197 24 621 A1, bei der Infrarotstrahlungsquellen von zwei Reflektoren flankiert werden, sodass jeweils keine Strahlung direkt von den Strahlungsquellen auf die zu erwärmenden Gegenstände gerichtet wird. Die Reflektoren weisen dabei jeweils unterschiedliche Krümmungsradien auf und reflektieren sowie fokussieren die abgegebene Strahlung in Richtung der zu erwärmenden Rohlinge. Beide Reflektoren befinden sich bezüglich einer Ebene, die durch die Längsachsen der zu transportierenden Rohlinge aufgespannt ist, auf einer Seite.

In der DE 100 51 641 A1 wird eine Heizeinrichtung zum erwärmen von Kunststoffrohlingen beschrieben, die aus einem Reflektor, einem Gegenreflektor sowie Infrarotstrahlungsquellen besteht.

Der Reflektor- und auch der Gegenreflektorhalter weisen Kühlmittelanschlüsse auf, um im Laufenden Betrieb der Heizeinrichtung eine optimale Kühlmittelversorgung aufrecht zu erhalten. Der Reflektor weist eine W-förmige Struktur zur Strahlungsfokussierung auf, der Gegenreflektor ist als flacher Plattenreflektor ausgebildet.

Bei beiden Lösungen wird Infrarotstrahlung von den Strahlern ausgesandt und von den Gegenreflektoren reflektiert. Die Reflektion der Strahlung am Gegenreflektor erfolgt aber wahllos, so dass eine gezielte Erwärmung bestimmter Bereiche des Preforms durch die zurückgeworfene Strahlung nicht möglich ist.

Es ist deshalb Aufgabe der vorliegenden Erfindung, eine Vorrichtung zur Warmbehandlung von Kunststoffrohlingen zu schaffen, deren Energieverbrauch verringert ist.

Erfindungsgemäß wird diese Aufgabe durch das Kennzeichen des Anspruchs 1 gelöst.

Weitere vorteilhafte Weiterbildungen werden in den Unteransprüchen angegeben.

Die Erfindung beschäftigt sich mit einer Vorrichtung zur Warmbehandlung von Kunststoffrohlingen, insbesondere Kunststoffpreforms zur Herstellung von Getränkeflaschen, die durch weitere Behandlungsvorgänge, insbesondere einen Streckblasvorgang, zu Endprodukten ausgeformt werden. Die Kunststoffrohlinge werden mit Hilfe von Aufnahmeeinrichtungen durch die Vorrichtung transportiert. Diese können auf unterschiedlichste Arten, wie z. B. Transportdorne oder Greifklammern ausgebildet sein. Handelt es sich bei den zu erwärmenden Kunststoffrohlingen um Preforms zur Getränkeflaschenherstellung, so ist zu gewährleisten, dass diese um ihre senkrechte Achse gedreht werden können, um eine gleichmäßige Erwärmung zu erfahren.

Entlang der Heizstrecke sind Strahlungsquellen angebracht, die die Erwärmung der Kunststoffrohlinge bewerkstelligen. Dabei können die Quellen Strahlung verschiedenster Wellenlängen aussenden. So ist es neben der herkömmlichen Methode, Kunststoffrohlinge mit Infrarotstrahlung zu erwärmen, auch möglich, z.B. UV-Strahlung oder Mikrowellenstrahlung zu verwenden. Der den Strahlungsquellen benachbarte Hauptreflektor ist vorzugsweise aus einem keramischen Material. Er kann aber auch aus einem anderen Material wie z. B. Aluminium oder einer Aluminiumlegierung bestehen.

Bezüglich der Förderrichtung der Kunststoffrohlinge gesehen befindet sich an der Förderbahn den Strahlungsquellen gegenüberliegend ein Gegenreflektor. Es kann sich dabei um einen einzelnen oder um mehrere Gegenreflektoren handeln. Diese können gegenüber dem Hauptreflektor entweder parallel oder mit einem bestimmten Winkel angeordnet sein. Der Gegenreflektor weist dabei ein Profil auf, das die zu reflektierende Strahlung in definierter Weise zurückwirkt. Ein solches Profil eines Gegenreflektors kann auf verschiedenste Arten ausgebildet sein. So ist es z. B. möglich, dass der Querschnitt des Profils eine V-, eine U-, eine Parabol-, eine halbrunde oder eine elliptische Form aufweist. Auf diese Weise kann die von den unterschiedlich profilierten Gegenreflektoren reflektierte Strahlung je nach der Art der Kunststoffrohlinge differenzierte Wärmeprofile erzeugen. Außerdem ist es denkbar, dass das Profil des Gegenreflektors in den Bereichen, die die Strahlung auf Bereiche des Kunststoffrohlings zurückwerfen, die mehr oder weniger erwärmt werden sollen, anders profiliert ist. Das bedeutet, dass sich das Teilstück des Gegenreflektors, das beispielsweise für die Erwärmung des Bodenbereichs vorgesehen ist, anders profiliert sein kann, als ein Teilstück des Gegenreflektors, das beispielsweise für die Erwärmung des Schulterbereiches vorgesehen ist. Dadurch kann das Temperaturprofil des Preforms sowohl über dessen Höhe als auch über seine Wanddicke beeinflusst werden. Es kann sich beispielsweise das Profil über seine Höhe von einer V-Form in eine halbrunde Form ändern, wenn eine differenzierte Erwärmung des Preforms erreicht werden soll. Will man diesbezüglich keine Unterscheidungen treffen, so ist es auch möglich, dass das Profil des Gegenreflektors achsensymmetrisch bezüglich einer zur Förderrichtung parallelen Achse ist.

Eine bevorzugte Weiterbildung der Erfindung besteht darin, dass die Profilierung des Gegenreflektors nicht als horizontal durchgängige Nut sondern als auf den Gegenreflektor aufgebrachtes Muster ausgeprägt ist. Die Aufbringung des Musters kann zum Beispiel mittels Einprägen einer Struktur auf die Oberfläche des Gegenreflektors bewerkstelligt werden. Dadurch kann beispielsweise eine Profilierung des Gegenreflektors erzeugt werden, die die Form von dreiseitigen oder vierseitigen Prismen aufweist. Auch andere Formen wie zum Beispiel Halbkugelschalen sind denkbar.

Eine Weiterbildung der Erfindung besteht darin, dass der Gegenreflektor zumindest teilweise aus Aluminium besteht. Es können aber auch andere Materialien wie weniger wärmeleitfähige oder nicht wärmeleitfähige Materialien verwendet werden.

Eine weitere bevorzugte Ausführungsform der vorliegenden Erfindung besteht darin, dass die Oberfläche des Gegenreflektors poliert ist. Durch solche Maßnahmen wird die Effizienz des Gegenreflektors weiter erhöht, da der Anteil diffus reflektierter Strahlung vermindert wird.

Eine weitere vorteilhafte Weiterbildung gemäß den Unteransprüchen besteht darin, dass der Hauptreflektor dem Gegenreflektor in Form und/oder Material gleich ist. Der Hauptreflektor kann aber auch in herkömmlicher Weise als ein- oder mehrteiliger Keramikreflektor ausgebildet sein.

Vor allem im Dauerbetrieb können die Reflektoren und Gegenreflektoren durch die ständige Bestrahlung stark erhitzt werden. Eine bevorzugte Weiterbildung besteht deswegen darin, den Gegenreflektor und den Hauptreflektor zu kühlen. Dabei ist sowohl eine aktive als auch eine passive Kühlung denkbar. Eine passive Kühlung kann z. B. durch eine besondere Anordnung der Reflektoren und Gegenreflektoren und die dadurch entstehende Luftzirkulation bzw. -strömung erzeugt werden. Reicht eine passive Kühlung nicht aus, so kann eine aktive Kühlung beispielsweise durch das Anbringen von Gebläsen oder das Einleiten von Kühlfluid in die Reflektoren erzeugt werden.

Die Anzahl der Strahlungsquellen kann kleiner oder gleich der Anzahl der in den Gegenreflektor eingebrachten Profilierungen sein. Ist die Anzahl der Strahler gleich der Anzahl der Profilnuten im Gegenreflektor, können sie so angeordnet werden, dass die Strahler und die Punkte der Profilnut, an denen die Breite des Gegenreflektors am geringsten ist, auf einer Ebene liegen, wobei diese Ebene auf der Längsachse des Kunststoffrohlings senkrecht steht. Sowohl bei gleicher als auch bei kleiner Anzahl können die Strahler bezüglich der Profilnuten aber auch beliebig angeordnet sein.

Bevorzugte Ausführungsformen werden anhand der Figuren dargestellt. Es zeigen:
- Figur 1: die Vorderansicht einer erfindungsgemäßen Vorrichtung, mit einem Gegenreflektor,
- Figur 2: eine Vorderansicht einer zweiten Ausführungsform mit einem Gegenreflektor,
- Figur 3: eine Vorderansicht einer dritten Ausführungsform mit einem Gegenreflektor und

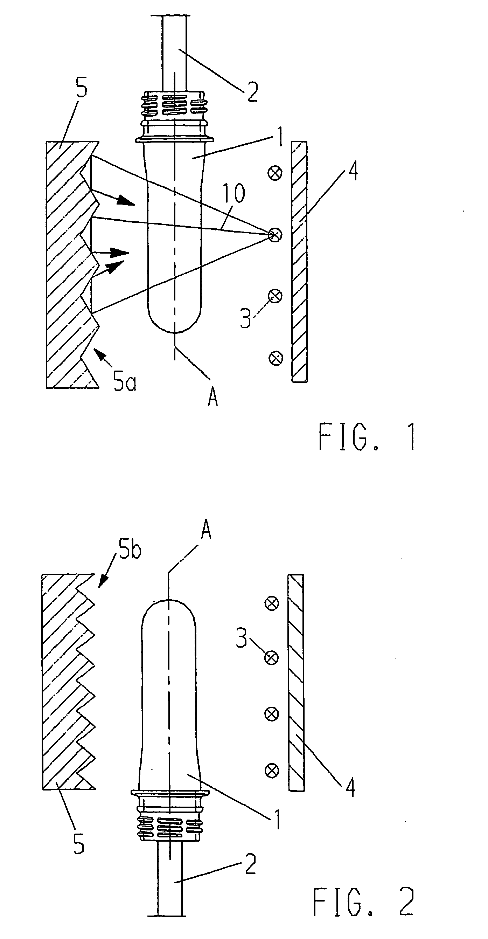

Figur 1 zeigt eine Vorderansicht einer Warmbehandlungsmaschine gemäß Anspruch 1. Die Preforms 1 zur Herstellung von Getränkeflaschen durch Streckblasen werden auf einem Dorn 2 aufgesteckt kontinuierlich durch die Vorrichtung transportiert. Die Förderrichtung F (siehe Fig. 4) verläuft dabei senkrecht zu einer Preformlängsachse A und der Zeichenebene. Entlang der Förderrichtung F sind links und rechts neben dem Preform 1 Hauptreflektoren 4 und Gegenreflektoren 5 einander mit Abstand gegenüberliegend angeordnet, die zusammen einen Erwärmungskanal bilden. Während der Bewegung entlang der Förderrichtung F werden die Dorne 2 mit einem am oberen Ende befindlichen, hier nicht gezeigten Zahnrad an einer nicht gezeigten Kette abgerollt, um eine kontinuierliche Drehbewegung D (siehe Fig. 4) des Preforms 1 um seine Längsachse A zu erzeugen. Dadurch wird eine gleichmäßige Bestrahlung und eine gleichmäßige Erwärmung des Preforms 1 über seinen gesamten Umfang erreicht. Die Längsachse A des Preforms 1 ist im wesentlichen parallel zum Hauptreflektor 4 und zum Gegenreflektor 5 ausgerichtet. Die zum Preform 1 zeigende Oberfläche des Gegenreflektors 5 weist V-förmige Nuten 5a auf, die sich parallel längs der Förderrichtung F erstrecken. Die Anzahl der Nuten, die sich im Gegenreflektor 5 befinden, stimmt dabei mit der Anzahl von Strahlungsquellen 3 überein, wobei sich die Strahlungsquellen 3 jeweils gegenüber der niedrigsten Stelle der Nut 5a befinden. Bei den sich zwischen dem Preform 1 und dem Hauptreflektor 4 befindlichen Strahlungsquellen 3 handelt es sich um Quarzinfrarotstrahler. Diese emittieren Infrarotstrahlung 10, die durch den Preform 1 hindurch oder an ihm vorbei in den Nuten 5a des Gegenreflektors 5 ankommt und direkt reflektiert wird oder durch Mehrfachumlenkung zum Preform 1 zurück gelangt. Durch diese gezielte Reflexion der Strahlung 10 wird der Anteil der diffusen Strahlung verringert und die Effizienz der Warmbehandlung gesteigert, weil ein größtmöglicher Strahlungsanteil in den Preform 1 eingebracht wird und dessen Erwärmung bewirkt. Der Hauptreflektor 4 der Vorrichtung ist nicht profiliert. Das Gewinde und der Halsring des Preforms 1 befindet sich nicht im Erwärmungskanal der Vorrichtung, da nur der Hals-, Schulter- und Bodenbereich des Preforms 1 behandelt werden soll.

Figur 2 zeigt eine ähnliche Vorrichtung, wobei der Unterschied nur in der Art des Transports des Preforms 1 durch die Vorrichtung und der Profilierung des Gegenreflektors 5 besteht. Während der Preform 1 in Fig. 1 mit dem Gewinde und dem Halsring nach oben weisend durch die Vorrichtung transportiert wird, befindet sich bei der Ausführung nach Fig. 2 der Preformaufnahmedorn 2 und somit auch der Gewindebereich des Preforms 1 unterhalb des durch den Gegenreflektor 5 und Hauptreflektor 4 gebildeten Erwärmungskanals. Somit kann die Abwärme der Vorrichtung, die aufgrund physikalischer Prozesse nach oben steigt, den Hals- und Gewindebereich des Preforms 1 nicht unerwünscht erwärmen. Der Gegenreflektor 5 weist auch hier eine v-förmige Profilierung in Form von längs zur Förderrichtung verlaufenden Nuten 5b auf. Allerdings ist die Anzahl der Nuten 5b im Gegenreflektor 5 im Vergleich zur Ausführungsform in Figur 1 größer als die Anzahl der zur Verfügung stehenden Strahlungsquellen 3. Diese müssen auch nicht (wie in Figur 1) gegenüber der bezüglich der Breite des Gegenreflektors 5 dünnsten Stelle angeordnet sein.

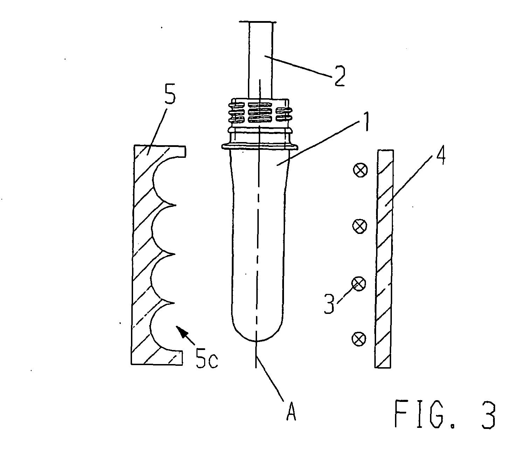

Figur 3 zeigt einen Gegenreflektor 5 mit Nuten 5c, die einen halbkreisförmigen Querschnitt aufweisen. Dadurch kann die auf den Gegenreflektor 5 auftreffende Strahlung 10 gebündelt und definiert gerichtet auf den Preform 1 zurück reflektiert werden. Entgegen der Darstellung in Fig. 3 ist auch ein halbrunder oder ein elliptischer Profilquerschnitt denkbar.

## Patentansprüche

1. Vorrichtung zur Warmbehandlung von Kunststoffrohlingen (1) enthaltend Mittel zur Aufnahme (2) und zum kontinuierlichen Transport der Kunststoffrohlinge (1) durch die Vorrichtung, Strahlungsquellen (3) zur Erwärmung der Kunststoffrohlinge (1) insbesondere durch Infrarotstrahlung, den Strahlungsquellen (3) benachbarte Hauptreflektoren (4) und bezüglich einer Förderrichtung (F) der Kunststoffrohlinge (1) gegenüber den Strahlungsquellen (3) angeordnet mindestens einen Gegenreflektor (5) wobei der mindestens eine Gegenreflektor (5) und die Hauptreflektoren (4) so angeordnet sind, dass sie die Kunststoffrohlinge (1) bezüglich ihrer Längsachse (A) beidseitig jeweils parallel zur Förderrichtung (F) flankieren und so einen Erwärmungskanal bilden, in dem die Kunststoffrohlinge (1) erwärmbar sind, wobei der mindestens eine Gegenreflektor (5) an seiner dem Kunststoffrohling (1) zugewandten Oberfläche im Querschnitt im Wesentlichen V-förmig profiliert ist, **dadurch gekennzeichnet, dass** die Anzahl der Profilierungen gleich oder größer ist, als die Anzahl der Strahlungsquellen und wobei die Profilierung als sich parallel längs der Förderrichtung (F) erstreckende Nuten (5a) ausgebildet ist und durch die von den Gegenreflektoren (5) reflektierte Strahlung ein differenziertes Wärmeprofil erzeugbar ist.

2. Vorrichtung nach Anspruch 1, **dadurch gekennzeichnet, dass** das Profil des Gegenreflektors (5) symmetrisch ist.

3. Vorrichtung nach Anspruch 1 und / oder 2, **dadurch gekennzeichnet, dass** das Profil des Gegenreflektors (5) bezüglich der Längsachse (A) des Kunststoffrohlings (1) in seiner Höhe variiert.

4. Vorrichtung nach wenigstens einem der Ansprüche 1 bis 3, **dadurch gekennzeichnet, dass** der Gegenreflektor (5) zumindest an seiner Oberfläche, insbesondere insgesamt, aus Aluminium besteht.

5. Vorrichtung nach wenigstens einem der vorangegangenen Ansprüche, **dadurch gekennzeichnet, dass** die Oberfläche des Gegenreflektors (5) poliert ist.

6. Vorrichtung nach wenigstens einem der vorangegangenen Ansprüche, **dadurch gekennzeichnet, dass** der Hauptreflektor (4) aus einem keramischen Material besteht.

7. Vorrichtung nach wenigstens einem der vorangegangenen Ansprüche, **dadurch gekennzeichnet, dass** der Hauptreflektor (4) an seiner dem Kunststoffrohling (1) zugewandten Seite profiliert ist.

8. Vorrichtung nach wenigstens einem der vorangegangenen Ansprüche, **dadurch gekennzeichnet, dass** der Hauptreflektor (4) dem Gegenreflektor (5) in Form und / oder Material gleich ist.

9. Vorrichtung nach wenigstens einem der vorangegangenen Ansprüche, **dadurch gekennzeichnet, dass** die Profilierung des Gegenreflektors (5) im Querschnitt im Wesentlichen U-förmig ist.

10. Vorrichtung nach wenigstens einem der vorangegangenen Ansprüche, **dadurch gekennzeichnet, dass** die Profilierung des Gegenreflektors (5) im Querschnitt im Wesentlichen halbrund oder parabolförmig oder elliptisch ist.

11. Vorrichtung nach wenigstens einem der vorangegangenen Ansprüche, **dadurch gekennzeichnet, dass** der Gegenreflektor (5) eine prismatische Profilierung aufweist.

12. Vorrichtung nach wenigstens einem der vorangegangenen Ansprüche, **dadurch gekennzeichnet, dass** der Gegenreflektor (5) eine aktive Kühlung, insbesondere eine Wasserkühlung aufweist.

13. Vorrichtung nach wenigstens einem der vorangegangenen Ansprüche, **dadurch gekennzeichnet, dass** der Gegenreflektor (5) eine aktive Kühlung, insbesondere eine Luftkühlung aufweist.

14. Vorrichtung nach wenigstens einem der vorangegangenen Ansprüche, **dadurch gekennzeichnet, dass** der Gegenreflektor (5) insbesondere durch seine Anordnung in der Vorrichtung passiv gekühlt wird.

15. Vorrichtung nach wenigstens einem der vorangegangenen Ansprüche, **dadurch gekennzeichnet, dass** die von der Strahlungsquelle (3) emittierte Strahlung (10) durch den Gegenreflektor (5) so abgelenkt und reflektiert wird, dass eine gezielte Beeinflussung des Temperaturprofils des Kunststoffrohlings (1) sowohl bezüglich der Längsachse (A) als auch bezüglich der Wanddicke vorgenommen werden kann.

16. Vorrichtung nach wenigstens einem der vorangegangenen Ansprüche, **dadurch gekennzeichnet, dass** die Strahlungsquellen (3) Strahlung (10) im sichtbaren Bereich ausstrahlen.

17. Vorrichtung nach wenigstens einem der vorangegangenen Ansprüche, **dadurch gekennzeichnet, dass** die Strahlungsquellen (3) Strahlung (10) im nicht sichtbaren Bereich insbesondere im Infrarotbereich ausstrahlen.

## Claims

1. Device for the heat treatment of plastic blanks (1), containing means for receiving (2) and continuously transporting the plastic blanks (1) through the device, radiation sources (3) for heating the plastic blanks (1), in particular by means of infrared radiation, main reflectors (4) adjacent to the radiation sources (3) and at least one counter-reflector (5) arranged opposite the radiation sources (3) relative to a conveying direction (F) of the plastic blanks (1), the at least one counter-reflector (5) and the main reflectors (4) being arranged in such a manner that they flank the plastic blanks (1) on either side relative to their longitudinal axes (A) parallel to the conveying direction (F) and thus form a heating channel in which the plastic blanks (1) can be heated, and the at least one counter-reflector (5) being provided on its surface directed toward the plastic blank (1) with profiling having a substantially V-shaped cross section, **characterised in that** the number of profiled areas is equal to or greater than the number of radiation sources, the profiling takes the form of grooves (5a) extending in parallel in the conveying direction (F) and a differentiated thermal profile can be produced by the radiation reflected by the counter-reflectors (5).

2. Device according to claim 1, **characterised in that** the profile of the counter-reflector (5) is symmetrical.

3. Device according to claim 1 and/or claim 2, **characterised in that** the height of the profile of the counter-reflector (5) varies relative to the longitudinal axis (A) of the plastic blank (1).

4. Device according to at least one of claims 1 to 3, **characterised in that** at least the surface, in particular all, of the counter-reflector (5) consists of aluminium.

5. Device according to at least one of the preceding claims, **characterised in that** the surface of the counter-reflector (5) is polished.

6. Device according to at least one of the preceding claims, **characterised in that** the main reflector (4) consists of a ceramic material.

7. Device according to at least one of the preceding claims, **characterised in that** the main reflector (4) is provided with profiling on its side directed towards the plastic blank (1).

8. Device according to at least one of the preceding claims, **characterised in that** the main reflector (4) is identical to the counter-reflector (5) in terms of shape and/or material.

9. Device according to at least one of the preceding claims, **characterised in that** the profiling of the counter-reflector (5) has a substantially U-shaped cross section.

10. Device according to at least one of the preceding claims, **characterised in that** the profiling of the counter-reflector (5) has a substantially semi-circular, parabolic or elliptical cross section.

11. Device according to at least one of the preceding claims, **characterised in that** the counter-reflector (5) has prismatic profiling.

12. Device according to at least one of the preceding claims, **characterised in that** the counter-reflector (5) has an active cooling system, in particular a water cooling system.

13. Device according to at least one of the preceding claims, **characterised in that** the counter-reflector (5) has an active cooling system, in particular an air cooling system.

14. Device according to at least one of the preceding claims, **characterised in that** the counter-reflector (5) is passively cooled, in particular by means of its arrangement in the device.

15. Device according to at least one of the preceding claims, **characterised in that** the radiation (10) emitted by the radiation source (3) is deflected and reflected in such a manner by the counter-reflector (5) that the temperature profile of the plastic blank (1) can be influenced in a controlled manner both relative to the longitudinal axis (A) and relative to the wall thickness.

16. Device according to at least one of the preceding claims, **characterised in that** the radiation sources (3) emit radiation (10) in the visible range.

17. Device according to at least one of the preceding claims, **characterised in that** the radiation sources (3) emit radiation (10) in the non-visible range, in particular in the infrared range.

## Revendications

1. Dispositif de traitement thermique d'ébauches en matière plastique (1) comprenant :
- des moyens pour recevoir (2) et pour transporter en continu les ébauches en matière plastique (1) à travers le dispositif,
- des sources de rayonnement (3) pour chauffer les ébauches en matière plastique (1), notamment par un rayonnement infrarouge des réflecteurs principaux (4) au voisinage des sources de rayonnement (3), et
- selon le sens de transfert (F) des ébauches en matière plastique (1), en regard des sources de rayonnement (3), au moins un réflecteur opposé (5),
- au moins ce réflecteur opposé (5) et les réflecteurs principaux (4), étant installés de façon à flanquer les ébauches en matière plastique (1), suivant leur axe longitudinal (A), de part et d'autre, chaque fois parallèlement à la direction de transfert (F), et de constituer ainsi un canal de chauffage dans lequel on chauffe les ébauches en matière plastique (1),
- dans lequel au moins un réflecteur opposé (5) a sur sa surface tournée vers l'ébauche en matière plastique (1), un profil en section pratiquement en forme de V,
**caractérisé en ce que**
le nombre de profils est égal ou supérieur au nombre des sources de rayonnement, et
le profilage est réalisé sous la forme de rainures (5a) s'étendant parallèlement, le long de la direction de transfert (F), et
le rayonnement réfléchi par les réflecteurs opposés (5) générant un profil thermique différencié.

2. Dispositif selon la revendication 1,
**caractérisé en ce que**
le profil du réflecteur opposé (5) est symétrique.

3. Dispositif selon la revendication 1 et/ou 2,
**caractérisé en ce que**
le profil du réflecteur opposé (5) varie en hauteur par rapport à l'axe longitudinal (A) de l'ébauche en matière plastique (1).

4. Dispositif selon l'une des revendications 1 à 3,
**caractérisé en ce qu'**
au moins la surface extérieure et notamment tout le réflecteur opposé (5), sont en aluminium.

5. Dispositif selon l'une des revendications précédentes,
**caractérisé en ce que**
la surface du réflecteur opposé (5) est polie.

6. Dispositif selon l'une des revendications précédentes,
**caractérisé en ce que**
le réflecteur principal (4) est en une matière céramique.

7. Dispositif selon l'une des revendications précédentes,
**caractérisé en ce que**
le côté du réflecteur principal (4) tourné vers l'ébauche en matière plastique (1), est profilé.

8. Dispositif selon l'une des revendications précédentes,
**caractérisé en ce que**
le réflecteur principal (4) a une forme et/ou une matière identique à celle du réflecteur opposé (5).

9. Dispositif selon l'une des revendications précédentes,
**caractérisé en ce que**
le profilage du réflecteur opposé (5), correspond en section, pratiquement à une forme de U.

10. Dispositif selon l'une des revendications précédentes,
**caractérisé en ce que**
le profilage du réflecteur opposé (5) a une section pratiquement semi-circulaire, parabolique ou elliptique.

11. Dispositif selon l'une des revendications précédentes,
**caractérisé en ce que**
le réflecteur opposé (5) a un profil prismatique.

12. Dispositif selon l'une des revendications précédentes,
**caractérisé en ce que**
le réflecteur opposé (5) est équipé d'un moyen de refroidissement actif et notamment d'un refroidissement par eau.

13. Dispositif selon l'une des revendications précédentes,
**caractérisé en ce que**
le réflecteur opposé (5) est équipé d'un moyen de refroidissement actif, notamment un refroidissement par air.

14. Dispositif selon l'une des revendications précédentes,
**caractérisé en ce que**
le réflecteur opposé (5) est refroidi de manière passive, notamment par son installation dans le dispositif.

15. Dispositif selon l'une des revendications précédentes,
**caractérisé en ce qu'**
on dévie et réfléchit le rayonnement (10) émis par la source de rayonnement (3) par le réflecteur opposé (5), pour influencer de manière ciblée le profil de température de l'ébauche en matière plastique (1) à la fois selon l'axe longitudinal (A) et en fonction de l'épaisseur de la paroi.

16. Dispositif selon l'une des revendications précédentes,
**caractérisé en ce que**
les sources de rayonnement (3) émettent un rayonnement (10) dans le domaine visible.

17. Dispositif selon l'une des revendications précédentes,
**caractérisé en ce que**
les sources de rayonnement (3) émettent un rayonnement (10) dans le domaine non visible, en particulier dans le domaine infrarouge.
